# EUROPEAN PATENT APPLICATION

(11) **EP 3 040 925 A1**
(43) Date of publication of application: **06.07.2016**
(21) Application number: 15305002.6
(22) Date of filing: 05.01.2015
(51) Int. Cl.: G06Q 20/38

(54) **Method to verify a dynamic security code after sampling**

(71) Applicant: GEMALTO SA, 92190 Meudon (FR)
(72) Inventor: AKHTARY, Siavosh, 13881 GEMENOS CEDEX (FR); ELIASSON, Andreas, 13881 GEMENOS CEDEX (FR)
(74) Representative: Scheer, Luc

(57) **Abstract**

The present invention relates to a method to verify a dynamic security code (DSC) comprising n digits (DSCn) generated in a DSC generation device (GD), said verification method being implemented using a verification system (MW) using a DSC acquisition scheme (WS) based on m digits, m being strictly inferior to n, and a verification back-end (BE) able to verify DSC based on n digits (DSCn), said method comprising the steps of, for the verification system (MW):
- receiving (S1) a sample of m digits (DSCm) using the DSC acquisition scheme,
- sending (S2) a request (RQ(ID)) comprising information (ID) related to the DSC generation device (GD) to a secure module (SM) to calculate several DSC candidates (SET((DSCn)i)) depending on current status (C1...CN) and DSC generation device information (ID),
- receiving (S3) the several DSC candidates (SET((DSCn)i)),
- selecting (S4) DSC candidates ((DSCn)i) comprising the m received digits (DSCm),
- if available, sending the selected DSC candidates ((DSCn)i) to verification back-end (BE).

## Description

### FIELD OF THE INVENTION

The present invention relates to a method to verify a dynamic security code, designated by DSC in the following, comprising n digits generated in a dynamic security code generation device.

The invention also pertains to a DSC generation device, a verification system using said method and a secure module to implement the invention.

### BACKGROUND OF THE INVENTION

Despite numerous protection methods, credit card fraud is on the rise. Among protection methods, it is known to use diverse codes to be used to validate transactions, typically payments. It is in particular known to encode a code known as CVC1 or CVV1 on the magnetic stripe for transactions in person. This code is also used in EMV cards.

For point-of-sale transactions, a scanning device will check the CVC1 or CVV1 encoded within the card. This ensures that the user actually possesses the credit card and not just the embossed card number. Other types of codes are not encoded on the magnetic stripe or in the smart card and are used for remote transactions such as over the telephone, Internet, by mail or by fax or any other remote transactions.

Among such codes, to improve the security of credit card transactions, the use of a 3 or 4 digit number known as Card Security Code (CSC) has been widely spread. The CSC comes in addition to an embossed card number, PIN or password associated with the card. It helps to ensure that a user possesses the actual credit card at some level.

The security code CSC is written on the card, typically on the back, on the signature stripe, or on the front. Such CSC are known as Card Verification Value (CVV or CVV2), Card Verification Value Code (CVVC), Card Verification Code (CVC), Verification Code (V-Code or V Code), or Card Code Verification (CCV). Provision of CSC is intended to verify that the customer has the card in his possession. However, the security is indeed more limited as knowledge of the code only proves that the customer has seen the card, or has seen a record made by somebody who saw the card.

In situation of online payments for example telephone- or Internet-based transactions, in which users are unable to scan the magnetic strips of their cards or the chip, typically EMV chip, of the card, a user can relay the card's CVV2 or CVC2 code which is usually printed on the back of the card in the signature panel.

Banks are now looking to deploy display cards with Dynamic CVV to mitigate eCommerce fraud. Transaction cards are thus able to generate a new CVV code for each transaction. Indeed, a unique algorithm, typically OATH algorithm, is associated to the card, which results in a new security code after either a predefined time window or after every single transaction. This feature necessitates verification back-end systems supporting verification of 3 or 4 digits one-time password (OTP) to perform secure eCommerce transaction signature.

As the security entropy of such CVV codes would today be deemed low and based on the standard of only visualizing 3 digits for MasterCard and Visa cards there is a need for better security.

Further alternative and advantageous solutions would, accordingly, be desirable in the art.

### SUMMARY OF THE INVENTION

The present invention aims at increasing security in online payment situations.

The present invention is defined, in its broadest sense, as a method to verify a dynamic security code (DSC) comprising n digits generated in a DSC generation device, said verification method being implemented using a verification system using a DSC acquisition scheme based on m digits, m being strictly inferior to n, and a verification back-end able to verify DSC based on n digits, said method comprising the steps of, for the verification system:
- receiving a sample of m digits using the DSC acquisition scheme,
- sending a request comprising information related to the DSC generation device to a secure module to calculate several DSC candidates depending on current status and DSC generation device information,
- receiving the several DSC candidates,
- selecting DSC candidates comprising the m received digits,
- if available, sending the selected DSC candidates to verification back-end.

The invention enables to use a standard acquisition scheme of m digits while reaching the security offered by greater number of digits OTP. The invention offers a compatibility of the use with large OTP with pre-existing acquisition scheme asking for an OTP of smaller size. The sample of m digits among the n digits of the generated DSC constitutes a truncated security code. The invention enables to check any truncated DSC to fit with the acquisition scheme. It can include DSC truncated by a user him/herself while filing the acquisition scheme. For example, the dynamic CVV is a time based solution.

In this case, internally, in a display card, is created a 6 digit OTP among which only 3 digits of the 6 digit OTP are exposed on the display on back of the banking card. On the verification side, are calculated a number of OTP depending on the time window using a Hardware Secure Module (HSM) connected to the acquisition scheme as available in a presentation layer of the verification system.

While stepping through the generated onetime passwords, the correct onetime passwords that contain the 3 digits provided by the end user are picked. The selected 6 digits OTP are then sent to verification back-end.

The invention provides additional security while using Dynamic CVV with cards displaying only a small number of digits.

According to a particular feature, said selection also involves ordering the DSC candidates according to their sequence of generation or timestamp used to generate them.

This feature enables successful validation in case several DSC are received for verification within a short time-span and one of those verification results in a selection of more than one DSC candidate to be sent to the verification back-end. It enables the verification back-end to test the different DSC according to their generation time.

According to a specific feature, one item of the selected DSC candidates is sent to the verification back-end at a time.

This feature further enables successful validation in case several DSC are received for verification within a short time-span and one of those verification results in a selection of more than one DSC candidate to be sent to the verification back-end. Here the DSC candidates are sent one by one.

For the same reason, according to a further advantageous feature, if the response of the verification back-end is that the DSC candidate is valid, no further DSC candidate is sent to the back-end.

In an advantageous embodiment, the secure module is a Hardware Security Module.

The use of such a device offers a great level of security while enabling a fast and efficient calculation of the dynamic OTP as the HSM are generally intended to manipulate keys and algorithms in a secure manner to protect them from attacks from the administrators and operation personnel handling the verification system and verification back-end.

According to an embodiment, the method comprises a preliminary step to generate a n digits dynamic security code on board a security code generation device and to display only a sample of m among the n digits on this security code generation device.

The security code generation device is typically a display card having a chip. In this embodiment, the user enters only the m digits as displayed on the card.

This embodiment enables the user to have direct access to the DSC generation capability within the payment card used for financial transactions, without having to use a separate device for the DSC generation.

According to specific feature, the request further comprises information related to the transaction and/or to the current time.

This feature enables to transfer necessary information to the algorithm as implemented in the secure module and generating the set of DSC candidates.

According to an implementation, DSC acquisition scheme is pre-established according to verification system conception.

This implementation is compatible with pre-existing acquisition scheme.

According to an advantageous embodiment, the method further comprises a step of updating a failure counter recording the number of failed DSC verifications if no DSC candidate is considered valid by the verification back-end.

This enables to track the successive failure and, if necessary, to definitively refuse any transaction using the concerned card.

According to a specific implementation, said failure counter is updated by the verification back-end, and subsequently updated by the verification system. Advantageously said update is performed with additional information about the number of DSC candidates selected.

As the verification back-end checks the validity of the OTP as selected by the verification system, it is the first informed of the failure of the verification. The information is then transferred to the verification system for update.

Advantageously, a given number of failed DSC verifications triggers a revocation of the DSC generation device relative to the information in the request.

Within this process it is advantageous to know the number of DSC candidates selected to know when to perform the revocation.

This feature consists in blocking the card for eCommerce payment transactions once a maximum number of failures is recorded.

The invention further concerns a dynamic security code generation device comprising at least a display and a DSC generator to generate n digits DSC when requested to authorize a transaction, said display displaying a sample of m digits among the n digits of the generated DSC.

Such a dynamic security code generation device is typically a display card.

According to a specific feature, said sampling of the digits is random.

Advantageously, said sampling is based on the analysis of the randomness for each digit.

This feature applies in cases where it is known that some digits are offering a better randomness than others in the constitution of the OTP. Some OTP generation algorithms involve static information, i.e. non-random information, associated to some of the digits. To maintain the security level, such digits should not be chosen to be the selected digits.

The invention relates also to a verification system for the implementation of the invention to verify a dynamic security code (DSC) comprising n digits generated in a DSC generation device, said verification system using a DSC acquisition scheme based on m digits, m being strictly inferior to n, said verification system comprising a communication unit to communicate with a secure module and with a verification back-end able to verify DSC based on n digits, said communication unit being used to receive a sample of m digits using the DSC acquisition scheme, to send a request comprising information related to the DSC generation device to a secure module to calculate several DSC candidates depending on current status and DSC generation device information, to receive the several DSC candidates, the verification system further comprising a selection unit to select DSC candidates comprising the m received digits, the communication unit being further used to, if available, send the selected DSC candidates to verification back-end.

The invention at last relates to a secure module for the implementation of the invention, said secure module having a communication unit to receive a request for DSC candidates and a calculation module to calculate a plurality of DSC candidates based on information related to the DSC generation device as received in the request.

Such a secure module is typically a hardware secure module. This module can be part of the verification back-end or the back-end verification system can be part of the secure module, or the back-end verification system can be the same system as the secure module.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Thus, for a more complete understanding of the invention, the invention will now be described in detail with reference to the accompanying drawing, wherein:
- Figure 1 represents an environment where the invention is implemented;
- Figure 2 schematically shows a dynamic security code generation device according to a preferred embodiment of the invention;
- Figure 3 shows a sequence chart of the method of the invention.

### DETAILED DESCRIPTION OF EMBODIMENTS OF THE INVENTION

The same elements have been designated with the same reference numerals in the different drawings. For clarity, only those elements and steps which are useful to the understanding of the present invention have been shown in the drawings and will be described.

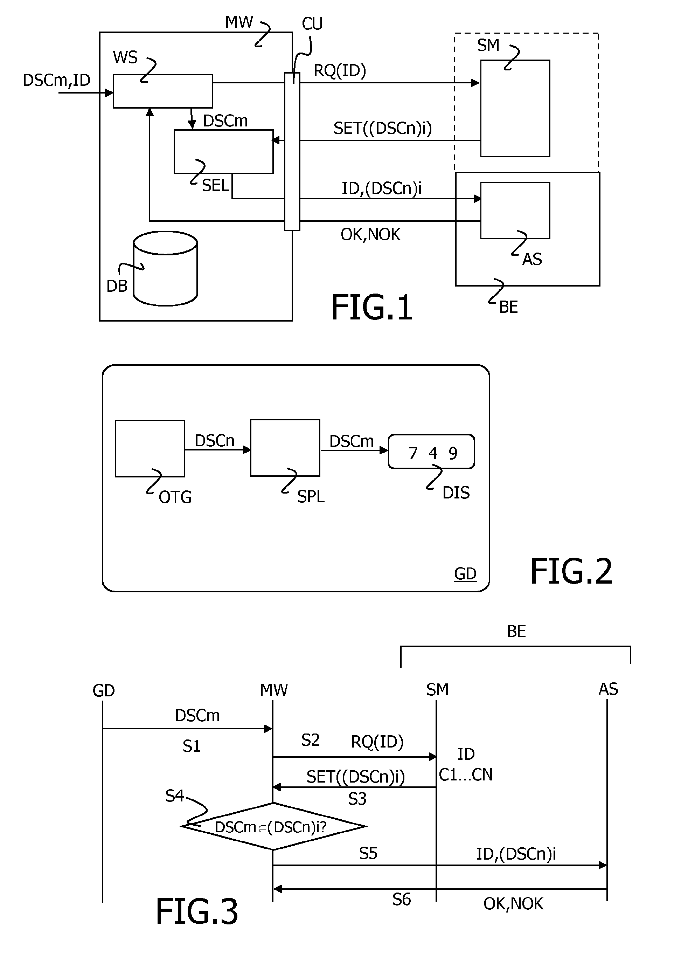

FIG. 1 schematically shows an environment where the invention is implemented. In this environment, a middleware MW comprises typically a database DB and a web server WS to which a user can connect. This middleware MW is part of a verification system able to verify a dynamic security code DSC comprising n digits. The middleware MW represents the verification system.

The invention takes place in a context where the verification system uses a DSC acquisition scheme based on m digits. Typically this situation occurs when the web server WS is configured to receive m digits. It is currently the case for all web servers using card security code CSC of the kinds exposed in the introductory part. In existing scheme, 3 or 4 digits are used.

As above developed, the invention aims to answer security issues related to the weak number of digits used for such security codes. It is today intended to proceed to verification with a greater number n of digits, typically at least 6. Such solutions are based on the generation of a one-time code of length n and on the verification by a verification back-end BE with which the middleware MW communicates through a communication unit CU.

The verification back-end comprises an authentication server AS used to proceed to the authentication process. Typically it communicates with a secure module SM which performs sensitive calculation, including the calculation of the one-time code. The authentication server AS can also be mingled with the secure module SM itself. They are thus a same entity. Indeed there are currently several embodiments for OTP verification being used since many years: authentication server only, in this case, the secure module is mingled with such an authentication server, secure module only, in this case, the authentication server is mingled with such a secure module and combined authentication server and secure module working together acting as one entity.

According to a preferred embodiment of the invention, the DSC of n digits is generated by a DSC generation device GD.

Figure 2 shows such a generation device GD. This device GD includes a one-time code generator OTG. This generator OTG implements a specific algorithm, typically a standard algorithm of the OATH kind shared with at least the secure module SM in the verification system. A dynamic security code DSCn of length n is thus generated by the generator OTG. To be compatible with the acquisition scheme used by the verification system, the DSC generation device GD comprises a sampler SPL which samples m digits among the n ones creating a truncated security code DSCm. The generation device further includes a display DIS to display the m digits only.

The user thus visually access to only m digits, here 3, that he/she can input in the acquisition scheme offered by the web server WS.

Figure 3 shows a sequence chart of the method of the invention. The input of the truncated security code DSCm by the user is illustrated by a step S1. The middleware MW then sends a request RQ(ID) to a secure module SM to calculate candidates for one-time codes in a step S2. For this purpose it provides the secure module with information ID related to the generation device GD. Typically, these information ID comprises a serial number or a secret key. MW also provides, unless the SM already has pre-existing knowledge through configuration, the parameter C1...CN, being a range of counters, timestamps or indices identifying what candidates to calculate.

In the case a OATH algorithm is implemented, there would be a need for the middleware tier to do an OATH serial number lookup. As there are many alternative methods to request an OTP from an HSM (based on PAN, based on OATH seed serial number, based on user id, based on some other date, or a combination of one or more of these factors), there exists many alternatives of implementations.

With the information ID and using parameters C1...CN, the secure module calculates a set of DSC candidates SET((DSCn)i.

In a step S3, the set of DSC candidates SET((DSCn)i is sent to the middleware MW. In a step S4, the middleware MW compares each of the received DSC of the set to the m digits input by the user. (DSCn)i having the m digits received by the user are selected and sent one by one, in a step S5, to the authentication server AS of the verification back-end BE with the information ID related to the generation device. Depending on the issue of the authentication process, in a step S6, an OK or NOK (Not OK) is issued by the verification back-end. The authentication process implemented on the verification back-end is one of the kinds known by the man skilled in the art and based on one-time code technology.

It is here noted that the secure module can be integrated in the verification back-end or being independent. It is illustrated by a dashed line on figure 1 where the steps of the method of the invention can also be seen. Also, depending on the embodiment, steps S2, S3, S5 and S6 can either be performed by an authentication server, constituting also a secure module, or by a secure module, constituting also an authentication server, or in a combined way by the two different entities working together.

In the following in given a practical concrete example of application of the invention.

If the PAN provided by the end user would be: 1234 5678 9012 3456 the middleware tier would do a database query to find out the oath seed serial number which could be 9876543210.

During the perso time of the card, there is a need to know the time window size which could be 60 seconds and the index number of how many future and past OTP's the HSM would need to generate as the real time clock of the display card might be drifting either in positive or negative aspects compared to the time on the middleware tier. The bank could decide to have an index of 5 for example.

When sent to the HSM, the interface would be for instance generateOTPList(seedSerial, timeStepWindowSize, driftlndex).

In this case the HSM would derivate a seed key for the card with the serial number of 9876543210 based on the seed master key that has been provisioned to it previously during a key ceremony. The HSM would then and use the derivated key as well as timeStepWindowSize and driftIndex and return a list of OTP's.

The middleware tier would then compare the 3 digit OTP provided by the end user as dynamic CVV with the list of OTP's delivered by the HSM and pick up the OTP's that would include the 3 digits provided by the end user before sending the PAN and the OTP's to the verification server for authentication.

Insubstantial changes from the claimed subject matter as viewed by a person with ordinary skill in the art, now known or later devised, are expressly contemplated as being equivalently within the scope of the claims. Therefore, obvious substitutions now or later known to one with ordinary skill in the art are defined to be within the scope of the defined elements.

In the above detailed description, reference is made to the accompanying drawings that show, by way of illustration, specific embodiments in which the invention may be practiced. In particular, locations of the different units/modules can be different while not departing from the scope of the invention. These embodiments are described in sufficient detail to enable those skilled in the art to practice the invention. The above detailed description is, therefore, not to be taken in a limiting sense, and the scope of the present invention is defined only by the appended claims, appropriately interpreted.

## Claims

1. Method to verify a dynamic security code (DSC) comprising n digits (DSCn) generated in a DSC generation device (GD), said verification method being implemented using a verification system (MW) using a DSC acquisition scheme (WS) based on m digits, m being strictly inferior to n, and a verification back-end (BE) able to verify DSC based on n digits (DSCn), said method comprising the steps of, for the verification system (MW):
- receiving (S1) a sample of m digits (DSCm) using the DSC acquisition scheme,
- sending (S2) a request (RQ(ID)) comprising information (ID) related to the DSC generation device (GD) to a secure module (SM) to calculate several DSC candidates (SET((DSCn)i)) depending on current status (C1...CN) and DSC generation device information (ID),
- receiving (S3) the several DSC candidates (SET((DSCn)i)),
- selecting (S4) DSC candidates ((DSCn)i) comprising the m received digits (DSCm),
- if available, sending the selected DSC candidates ((DSCn)i) to verification back-end (BE).

2. Method according to claim 1, wherein said selection (S4) also involves ordering the DSC candidates ((DSCn)i) according to their sequence of generation or timestamp used to generate them.

3. Method according to one of claims 1 and 2, wherein one item of the selected DSC candidates ((DSCn)i) is sent to the verification back-end (BE) at a time.

4. Method according to claim 3, wherein, if the response of the verification back-end (BE) is that the DSC candidate ((DSCn)i) is valid, no further DSC candidate ((DSCn)i) is sent to the back-end (BE).

5. Method according to one of claims 1 to 4, wherein the secure module (SM) is a Hardware Security Module (HSM).

6. Method according to one of preceding claims, wherein the request (RQ(ID)) further comprises information related to the transaction and/or to the current time.

7. Method according to one of preceding claims, wherein the DSC acquisition scheme (WS) is pre-established according to verification system (MW) conception.

8. Method according to one of preceding claims, wherein it further comprises a step of updating a failure counter recording the number of failed DSC verifications if no DSC candidate is considered valid by the verification back-end (BE).

9. Method according to claim 8, wherein said failure counter is updated by the verification back-end (BE), and subsequently updated by the verification system (MW).

10. Method according to one of claims 8 and 9, wherein a given number of failed DSC verifications triggers a revocation of the DSC generation device (GD) relative to the information (ID) in the request (RQ(ID)).

11. Dynamic security code generation device (GD) comprising at least a display (DIS) and a DSC generator (OTG) to generate n digits DSC (DSCn) when requested to authorize a transaction, said display (DIS) displaying a sample (SPL) of m digits (DSCm) among the n digits of the generated DSC (DSCn).

12. DSC generation device (GD) according to claim 11, said DSC generation device (GD) being a card.

13. DSC generation device (GD) according to one of claims 11 and 12, wherein said sampling (SPL) of the m digits (DSCm) is random.

14. DSC generation device (GD) according to one of claims 11 and 12, wherein said sampling (SPL) is based on the analysis of the randomness for each digit.

15. Verification system (MW) for the implementation of the method as claimed in claims 1 to 10, to verify a dynamic security code (DSC) comprising n digits (DSCn) generated in a DSC generation device (GD), said verification system (MW) using a DSC acquisition scheme (WS) based on m digits, m being strictly inferior to n, said verification system (MW) comprising a communication unit (CU) to communicate with a secure module (SM) and with a verification back-end (BE) able to verify DSC based on n digits (DSCn), said communication unit (CU) being used to receive (S1) a sample of m digits (DSCm) using the DSC acquisition scheme (WS), to send (S2) a request (RQ(ID)) comprising information (ID) related to the DSC generation device (GD) to a secure module (SM) to calculate several DSC candidates (SET((DSCn)i)) depending on current status (C1...CN) and DSC generation device information (ID) and to receive (S3) the several DSC candidates (SET((DSCn)i)), the verification system (MW) further comprising a selection unit (SEL) to select (S4) DSC candidates ((DSCn)i) comprising the m received digits (DSCm), the communication unit (CU) being further used to, if available, send (S5) the selected DSC candidates to verification back-end.

16. Secure module (SM) for the implementation of the method as claimed in claims 1 to 10, said secure module (SM) having a communication unit to receive a request (RQ(ID)) for DSC candidates and a calculation module to calculate a plurality of DSC candidates (SET((DSCn)i)) depending on current status and on DSC generation device information (ID) as received in the request (RQ(ID)).
